# EUROPEAN PATENT APPLICATION

(11) **EP 1 788 543 A1**
(43) Date of publication of application: **23.05.2007**
(21) Application number: 06014842.6
(22) Date of filing: 17.07.2006
(51) Int. Cl.: G09F 13/12, F21V 23/04

(54) **Light box**

(30) Priority: 21.11.2005 CN 200520133270
(71) Applicant: Liao, Wen-Ching, Chiayi City (TW)
(72) Inventor: Liao, Wen-Ching, Chiayi City (TW)
(74) Representative: Ruschke, Hans Edvard

(57) **Abstract**

A light box (10) includes a box holding a light source (40) and a design film (50), and a lens (60), which is covered on the box in front of the design film and the light source and has a metal coating that reflects external light when the light source is turned off, and lets light pass from the light source (40) through the design film (50) to the outside when the light source (40) is turned on (Fig. 4).

## Description

### BACKGROUND OF THE INVENTION

### 1. Field of the Invention:

The present invention relates to light boxes and more particularly, to such a light box that can be used as a mirror as well as a regular light box.

### 2. Description of the Related Art:

Conventional light boxes can be used for two purposes, i.e., for the purpose of advertising and for the purpose of decoration. Light boxes for different purposes have a similar architecture.

A light box for the purpose of advertising has a broad surface area carrying an advertising design. There are light boxes designed for use outdoors and for use indoors for the purpose of advertising. Light boxes for the purpose of decoration are commonly designed for use indoors. Further, light boxes for the purpose of decoration commonly have a relatively smaller size and attractive outer shape, and are normally made to show the picture of a landscape or a figure.

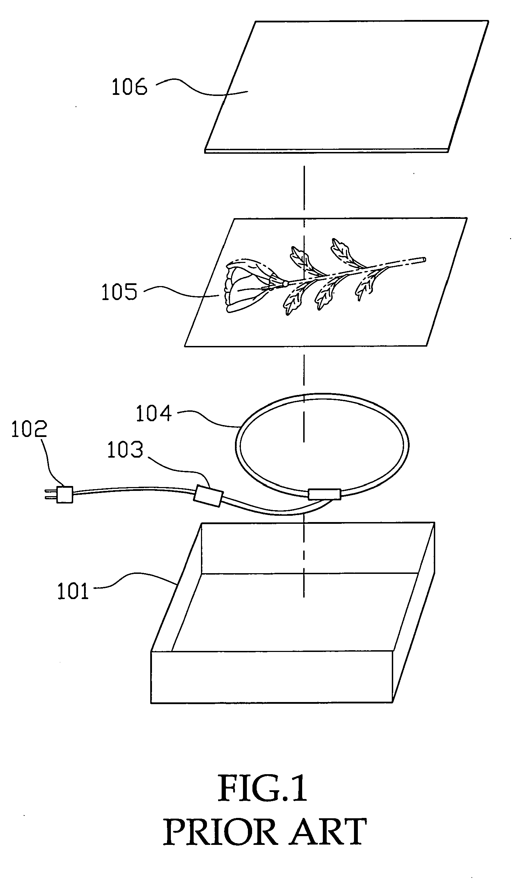

FIG. 1 shows a conventional light box. According to this design, the light box comprises a box **101**, which has a front open side, a light source, for example, a fluorescent tube **104** mounted inside the box **101**, a power cable **102** extended from the fluorescent tube **104** to the outside of the box **101** for connection to an external electric outlet to obtain the necessary working voltage for the fluorescent tube **104**, a ballast **103** installed in the power cable **102** for absorbing surge, a design film **105** mounted on the front open side of the box **101** and having a printed design on it, and a lens **106** covered on the front open side of the box **101** in front of the design film **105**. According to this design, the light box is simply used to show the design on the design film.

### SUMMARY OF THE INVENTION

According to the present invention, the light box comprises a box, which has a front open side, a light source, which is mounted inside the box and has a power cable extending out of the box for connection to an external power supply, a transparent design film, which is mounted in the box in front of the light source and has a colored design on it, and a lens, which is mounted on the front open side of the box in front of the transparent design film. The lens has one side thereof covered with a metal coating. Therefore, the lens works as a mirror to reflect light when the light source is turned off, or lets light pass from the light source through the design film to the outside of the light box for enabling people to see the design on the transparent design film when the light source is turned on.

Further, an electronic light regulator can be installed in the power cable for regulating the light intensity of the light source.

The light box further comprises photo sensor set outside the box for detecting the intensity of external light, and a controller installed in the power cable and electrically connected to the photo sensor and adapted to turn off the light source when the intensity of external light detected by the photo sensor surpassed a predetermined value and to turn on the light source when the intensity of external light detected by the photo sensor dropped below the predetermined value.

The box can be made of metal, plastics, or wood.

The light source can be formed of an incandescent bulb, a fluorescent tube, a quarts lamp, or a set of diodes.

The lens can be made of a transparent glass sheet or a transparent plastic sheet.

### BRIEF DESCRIPTION OF THE DRAWINGS

FIG. 1 is an exploded view of a light box according to the prior art.
FIG. 2 is an exploded view of a light box according to the present invention.
FIG. 3 is an assembly view of the light box according to the present invention.
FIG. 4 is a sectional view of the light box according to the present invention.
FIG. 5 is a schematic drawing showing the light box in operation according to the present invention.
FIG. 6 is an exploded view of an alternate form of the light box according to the present invention.
FIG. 7 is an exploded view of another alternate form of the light box according to the present invention.

### DETAILED DESCRIPTION OF THE PREFERRED EMBODIMENT

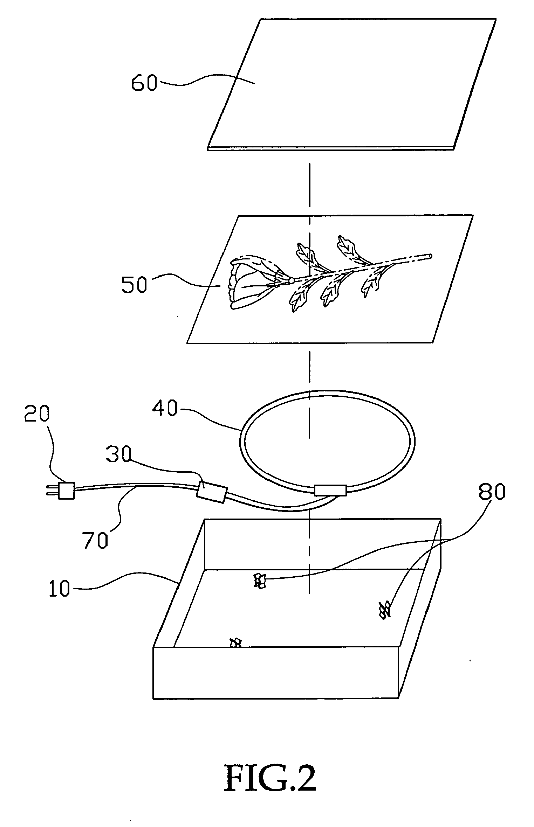

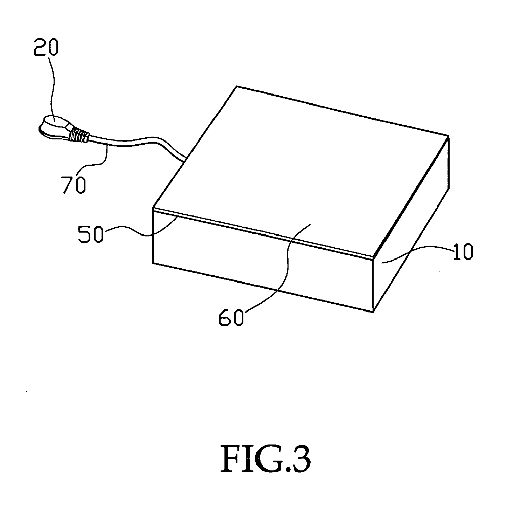

Referring to FIGS. 2~4, a light box in accordance with the present invention is shown comprising a box **10**, which has a front open side, and a light source **40** mounted inside the box **10**. According to this embodiment, the box **10** has a plurality of clips **80** provided on the inside for holding the light source **40** in place. The light source **40** can be comprised of an incandescent bulb or bulbs, a fluorescent tube or tubes, a quartz lamp or lamps, or light emitting diodes. According to this embodiment, the light source **40** is comprised of a fluorescent tube. Further, a ballast **30** is installed in the power cable **70** of the light source **40** to absorb surge. The power cable **70** terminates in an electric plug **20** for connection to an electric outlet (not shown) to obtain power supply for the light source **40**.

The light box further comprises a design film **50** and a lens **60**. The design film **50** is a transparent film having a colored design on it. The lens **60** can be formed of a transparent glass or plastic sheet member coated with a layer of metal coating that lowers the transmittancy of the lens **60** and increases the reflectivity of the lens **60**. After installation of the lens **60** on the front side of the box **10**, the metal coating of the lens **60** reflects outside light rays, and therefore the lens **60** works as a mirror to reflect outside image and to prohibit people from seeing the design of the design film **50**.

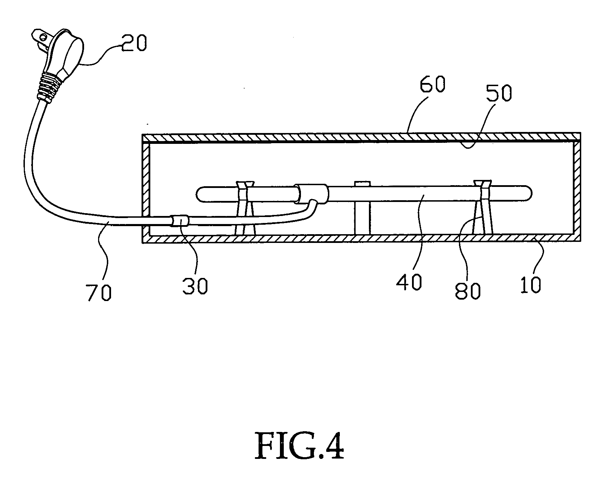

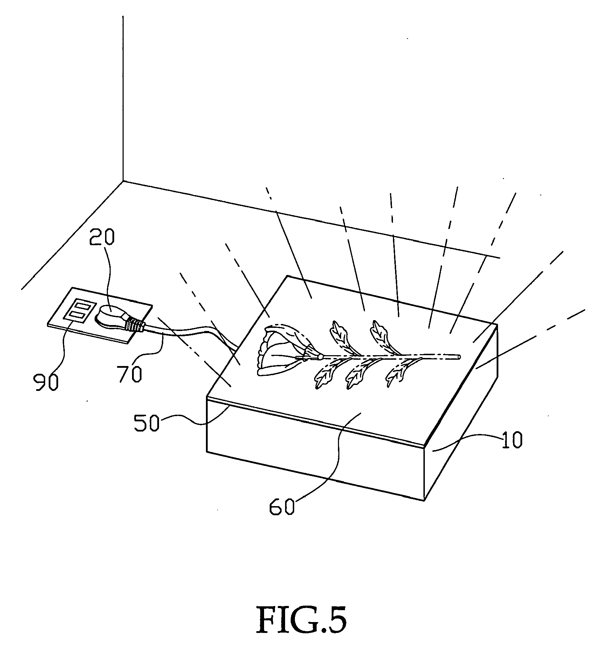

The light source **40** is mounted inside the box **10** and secured in plate by the clips **80**, and then the design film **50** and the lens **60** are installed in proper order on the front side of the box **10**. When in use, as shown in FIG. 5, the electric plug **20** is connected to an electric outlet **90**, thereby causing the light source **40** to emit light. Referring to FIG. 4, when the light intensity inside the light box is equal to or higher than the intensity of external light after the light source **40** has been turned on, light rays pass through the lens **60** to set off the reflection of external light rays, and therefore people can see the design on the design film **50** and will not see any reflected image from the lens **60**.

Obviously, the light box of the present invention can be used as mirror as well as a regular light box, having a high value.

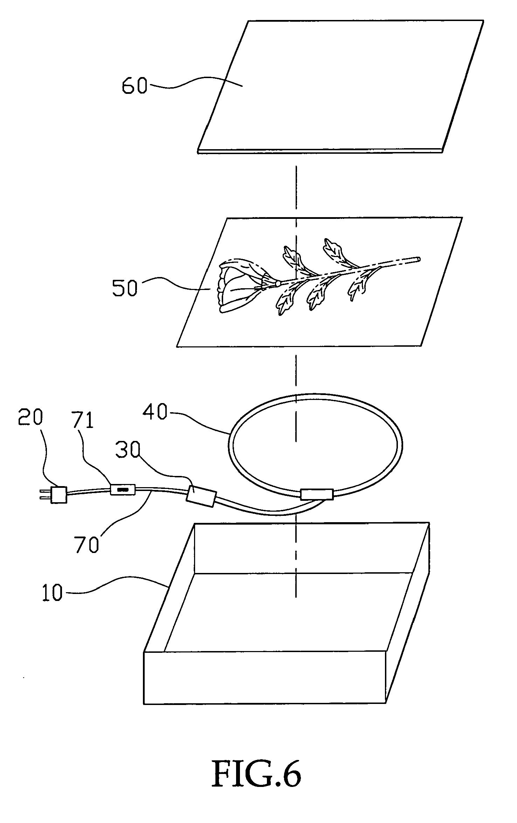

FIG. 6 is an exploded view of an alternate form of the light box according to the present invention. Similar to the embodiment shown in FIGS. 1~5, the light box of this embodiment is comprised of a box **10**, a light source **40**, a design film **50**, and a lens **60**. However, the power cable **70** of the light source **40** has installed therein an electronic light regulator **71** for regulating the intensity of light produced by the light source **40** subject to the variation of the intensity of external light. This embodiment can regulate the light intensity of the light source **40** subject to different time and different place, thereby saving energy and showing the design of the design film perfectly. The electronic light regulator **71** can be formed of, for example, a photo sensor and a controller.

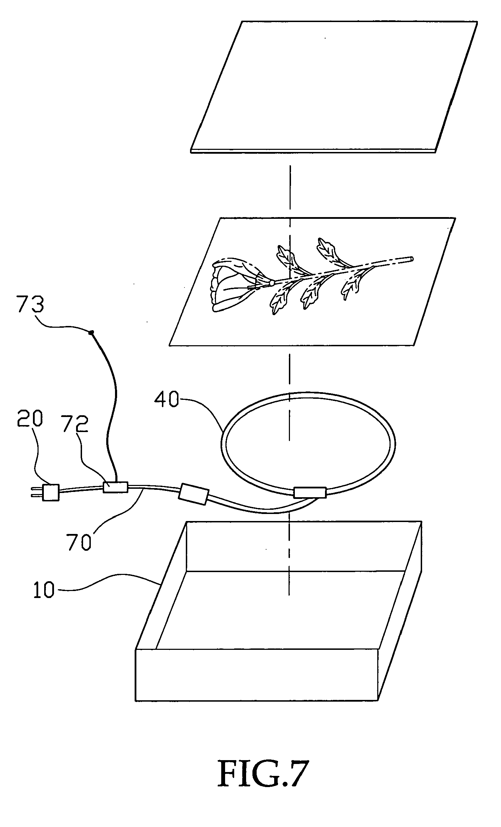

FIG. 7 is an exploded view of another alternate form of the light box according to the present invention. According to this embodiment, a controller **72** is installed in the power cable **70** between the electric plug **20** and the light source **40**, and a photo sensor **73** is electrically connected to the controller **72** disposed outside the box **10** to detect the intensity of external light. The controller **72** compares the value of the light intensity detected by the photo sensor **73** with a predetermined value set in the controller **72**, and automatically turns on/off the light source **40** subject to the comparison result, i.e., when the intensity of external light surpassed the set value, the controller **72** turns off the light source **40**, on the contrary, when the intensity of external light dropped below the set value, the controller **72** turns on the light source **40**.

Although particular embodiments of the invention have been described in detail for purposes of illustration, various modifications and enhancements may be made without departing from the spirit and scope of the invention.

## Claims

1. A light box (10) comprising:
a box, said box having a front open side;
a light source (40) mounted inside said box, said light source having a power cable (70) extending out of said box for connection to an external power supply;
a transparent design film (50) mounted in said box in front of said light source (40), said transparent design film having a colored design; and
a lens (60) mounted on the front open side of said box in front of said transparent design film, said lens (60) having one side thereof covered with a metal coating such that said lens works as a mirror to reflect image when said light source is turned off; said lens lets light pass from said light source (40) through said design film (50) to the outside of the light box for enabling people to see the design on said transparent design film when said light source is turned on.

2. The light box as claimed in claim 1, wherein said power cable (70) has installed therein an electronic light regulator (71) for regulating the light intensity of said light source.

3. The light box as claimed in claim 1, further comprising a photo sensor (73) set outside said box for detecting the intensity of external light, and a controller (72) installed in said power cable (70) and electrically connected to said photo sensor (73) and adapted to turn off said light source (40) when the intensity of external light detected by said photo sensor (73) surpassed a predetermined value and to turn on said light source (40) when the intensity of external light detected by said photo sensor dropped below said predetermined value.

4. The light box as claimed in claim 1, wherein said box is made of a material selected from a material group including metal, plastics, and wood.

5. The light box as claimed in claim 1, wherein said light source is selected from the light emitting devices including incandescent bulb, fluorescent tube, quarts lamp, and diodes.

6. The light box as claimed in claim 1, wherein said lens is selected from materials of transparent glass sheet and transparent plastic sheet.
